(19) Europäisches Patentamt / European Patent Office / Office européen des brevets

(11) **EP 3 098 976 B1**

(12) **EUROPEAN PATENT SPECIFICATION**

(45) Date of publication and mention
of the grant of the patent:
**03.09.2025 Bulletin 2025/36**

(21) Application number: **14879892.9**

(22) Date of filing: **09.07.2014**

(51) International Patent Classification (IPC):
*H04B 7/0426* (2017.01)      *H04B 7/06* (2006.01)
*H04B 7/08* (2006.01)        *H04L 5/00* (2006.01)
*H04W 28/18* (2009.01)       *H04W 74/00* (2009.01)
*H04W 52/02* (2009.01)       *H04W 52/08* (2009.01)
*H04W 52/14* (2009.01)       *H04W 52/24* (2009.01)
*H04W 52/34* (2009.01)       *H04W 52/42* (2009.01)

(52) Cooperative Patent Classification (CPC):
**H04B 7/0426; H04B 7/0617; H04B 7/0632;
H04B 7/0639; H04B 7/06952; H04B 7/088;
H04W 28/18; H04W 52/0245; H04W 52/04;
H04W 52/08; H04W 52/143; H04W 52/24;
H04W 52/346; H04W 52/42;** H04L 5/0048;   (Cont.)

(86) International application number:
**PCT/CN2014/081918**

(87) International publication number:
**WO 2015/109774 (30.07.2015 Gazette 2015/30)**

(54) **ACQUISITION METHOD, BEAM SENDING METHOD, COMMUNICATION NODE, SYSTEM AND STORAGE MEDIUM**

ERFASSUNGSVERFAHREN, STRAHLSENDEVERFAHREN, KOMMUNIKATIONSKNOTEN, SYSTEM UND SPEICHERMEDIUM

PROCÉDÉ D'ACQUISITION, PROCÉDÉ D'ÉMISSION DE FAISCEAUX, NOEUD DE COMMUNICATIONS, SYSTÈME ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2014  CN 201410028206**

(43) Date of publication of application:
**30.11.2016  Bulletin 2016/48**

(73) Proprietor: **ZTE Corporation
Shenzhen, Guangdong 518057 (CN)**

(72) Inventors:
• **XIAO, Huahua
Shenzhen
Guangdong 518057 (CN)**
• **CHEN, Yijian
Shenzhen
Guangdong 518057 (CN)**

• **ZHAO, Jing
Shenzhen
Guangdong 518057 (CN)**
• **LU, Zhaohua
Shenzhen
Guangdong 518057 (CN)**

(74) Representative: **Canzler & Bergmeier
Patentanwälte
Partnerschaft mbB
Despag-Straße 6
85055 Ingolstadt (DE)**

(56) References cited:
WO-A1-2011/127358     WO-A1-2013/133645
CN-A- 1 582 043       CN-A- 101 213 762
CN-A- 101 427 595     US-A1- 2011 255 434
US-A1- 2013 258 972   US-A1- 2015 049 824

**(Cont. next page)**

(52) Cooperative Patent Classification (CPC): (Cont.)
H04L 5/0094

## Description

## TECHNICAL FIELD

The present disclosure relates to the beam-forming technology in the field of wireless communications, and in particular to an acquisition method, a beam transmission method, a communication node, a system and a storage medium.

## BACKGROUND

Beam-forming is a technology related to directional transmission of data, through which energy is concentrated in a useful direction to enhance the signal-to-noise ratio of system, thereby increasing the coverage of the system.

Pilot information is information which is transmitted by a first communication node on a specified time-frequency resource and is known by both the first communication node and second communication node. According to the received pilot information, the second communication node estimates the information about a channel from the first communication node to the second communication node, calculates the quality of the channel, selects a beam which is found to be the best according to the quality of channel, feeds back one or more beams with better channel quality to the first communication node. The second communication node also can report channel quality to the first communication node, so that the first communication node has more information for reference while transmitting data.

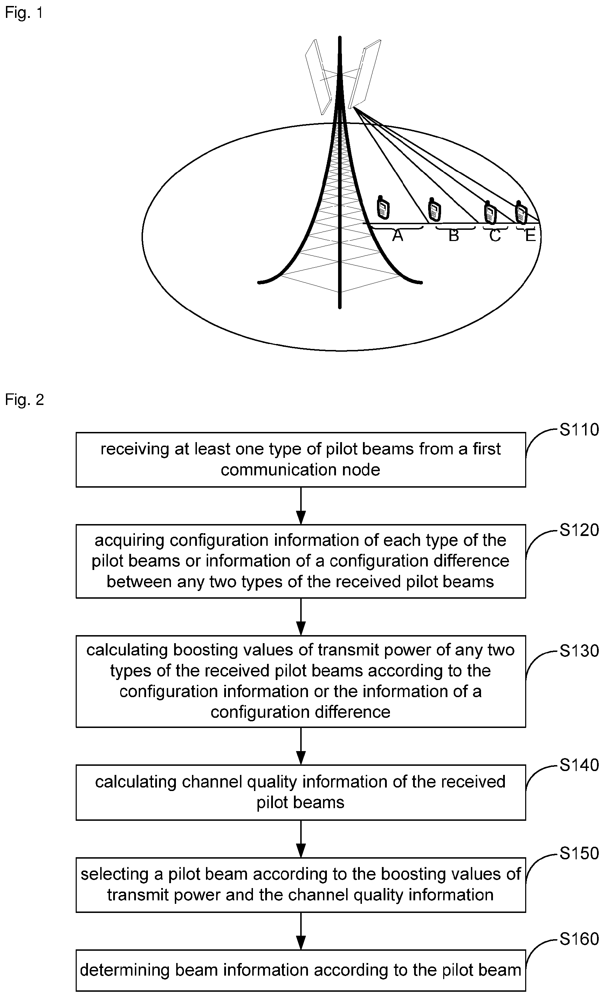

In actual beam-forming implementation, the first communication node generally has a fixed location while the second communication node is randomly distributed around the first communication node, causing different distances to the first communication node from different second communication nodes; as the second communication nodes with different distances have different path losses, the measurement pilots of the second communication nodes are influenced by noise or interference to different extents, thus the reliability is different too. The existing technology generally transmits a beam with the same feature to each of the second communication nodes without distinguishing the second communication nodes, for example, the transmit power, the beam gain, the multiplexing manner for transmitting beams, and the number of beams are all the same, which causes the second communication node with low path loss to waste power resources, while the second communication node with high path loss can not get a reliable measurement pilot for lacking of sufficient power resources. On the other hand, the second communication nodes probably are not evenly distributed on a horizontal plane, for example, there are a great number of second communication nodes in an area, while there are a small number of second communication nodes in another area. As shown in Fig. 1, in view of the vertical direction, the downward inclination angles corresponding to the same distance L are different, the farther the distance to the first communication node is, the smaller the downward inclination angle is, but the bigger the area of the formed ring is. In Fig. 1, the vertical direction is divided into 5 regions, including A, B, C, D and E in sequence; the length of each region is L; obviously, the downward inclination angle of the region A is bigger than that of the region B. However, since the semi-diameter of the region A is smaller, the area of the region A is smaller. If the second communication nodes are distributed evenly, the number of second communication nodes in the region A is smaller. Likewise, the number of second communication nodes in the region E is greater than that in the region D. The existing technology also transmits a beam with the same feature to the second communication node in all the regions without distinguishing the second communication nodes, this causes the region with dense second communication nodes not to obtain sufficient power or space resources, while the region with fewer second communication nodes has abundant power or space resources. Here the space resource is acquired through the orientation of beam-forming in the airspace, the narrower the beam is, the more accurate the division of air space is.

Document WO2011127358A1 discloses a method for dynamically controlling the transmit power of transmission streams transmitted via multiple antennas. A transmit power level for multiple streams is determined based on a first reference channel. The difference of signal to interface ratios (SIRs) between two reference channels may represent a power offset. The power offset may be used to determine gain factors used to transmit data channels on the secondary stream with reference to the gain factor of the first reference channel. The power offset may be used to determine other parameters, such a serving grant or transport block sizes of channels carried on the secondary stream. The power offset may allow transmission parameters of channels on the secondary stream to be determined based on the transmit power level of the primary stream and on a gain factor for a reference channel transmitted via the primary stream. The method is provided for the uplink. The power of the first reference channel corresponding to the first transmission stream is controlled by a received feedback. The first and second reference channels are precoded by different sets of precoding weights.

Document WO2013133645A1 discloses a method for performing hierarchical beamforming in a wireless access system and a device therefor. Particularly, the method comprises: an initial step for allowing a base station to transmit a plurality of first beams, to which different steering vector are applied, to a terminal, through corresponding reference signals; and a repetition step for allowing the base station to transmit a plurality of second beams, to which different steering vectors are applied, to the terminal, through corresponding reference signals by considering feedback information that contains an index of one or more beams received from the terminal. The repetition step can be repeated up to a predetermined number of times. US2013/258972 A1 discloses methods for determining a digital precoder, wherein different precoders are used for sending pilot signals on different subcarriers. Each precoder uses a respective transmission power which may include a boosted transmission power. Information about the power boost of each subcarrier is provided to the receiving user equipment for beam selection.

## SUMMARY

The invention is defined by the appended claims.

BRIEF DESCRIPTION OF THE DRAWINGS

Fig. 1 is a structure diagram of a communication system;

Fig. 2 is a flowchart of a method for acquiring beam information according to Embodiment 1 of the present disclosure;

Fig. 3 is a flowchart of a method for transmitting a pilot beam according to Embodiment 2 of the present disclosure;

Fig. 4 is a flowchart of a method for transmitting a pilot beam according to Embodiment 3 of the present disclosure;

Fig. 5 is a structure diagram of a communication node according to Embodiment 6 of the present disclosure;

Fig. 6 is a structure diagram of a communication node according to Embodiment 7 of the present disclosure;

Fig. 7 is a structure diagram of a communication node according to Embodiment 8 of the present disclosure; and

Fig. 8 is a structure diagram of a communication node according to Embodiment 9 of the present disclosure.

## DETAILED DESCRIPTION

The preferred embodiments of the present disclosure are described below in combination with accompanying drawings. It should be understood that the preferred embodiments described below are only to describe and illustrate the present disclosure, but to limit the present disclosure.

Embodiment 1

As shown in Fig. 2, this embodiment provides a method for acquiring beam information, including:

Step S110: receiving at least one type of pilot beams from a first communication node;

Step S120: acquiring configuration information of each type of the pilot beams or information of a configuration difference between any two types of the received pilot beams;

Step S130: calculating boosting values of transmit power of any two types of the received pilot beams according to the configuration information or the information of a configuration difference;

Step S140: calculating channel quality information of the received pilot beams;

Step S150: selecting a pilot beam according to the boosting values of transmit power and the channel quality information; and

Step S160: determining beam information according to the pilot beam.

The first communication node generally refers to a fixed communication node, for example, a macro base station, a micro base station, a repeater, a relay device and a remote Radio Frequency (RF) Unit and other wireless access communication devices accessing wireless networks, which realizes the wireless access of the second communication and communication with the second communication node through the interaction with the second communication node. In this embodiment the method for acquiring beam information is described from the side of the second communication node. After the beam information is acquired, the method further includes returning the acquired beam information to the first communication node to enable the first communication node to perform beam-forming according to the returned beam information. The second communication node generally refers to a data card, a mobile phone, a notebook, a personal computer, a tablet computer, a Personal Digital Assistant (DPA) or Bluetooth and other various terminals.

In step S110, the second communication node may receive a plurality of pilot beams at the same time or at different times within a specified time range under the wireless coverage of the first communication node; the plurality of pilot beams can be classified into many types depending on whether the pilot beams are the same. In this embodiment, the second communication node can receive one or more pilot beams under the scanning of the pilot beam of the first communication node. The pilot bam refers to a beam which bears pilot information. The beam refers to a radio wave having a specific shape and having been subjected to beam-forming.

During specific implementation, the execution order of step S120 and step S110 might not be fixed. The configuration information includes the absolute value of at least one of followings: the beam transmit power, the beam maximum gain, the beam width and the number of transmitted beams of the pilot beams;

the information of a configuration difference includes at least one of followings: the difference in the beam transmit power, the difference in the beam maximum gain, the difference in the beam width, the difference in the number of transmitted beams between any two types of the pilot beams.

The difference in the power of transmitting two types of pilot beams to one same second communication node can be learned from the configuration information or information of a configuration difference. The configuration information directly repretransmitteds the power, radiation direction, radiation angle and/or transmission times and other information of each type of pilot beams. The information of a configuration difference repretransmitteds the difference between at least two types of pilot beams, for example, the difference value in transmit power; during specific implementation, the differences between any two types of the pilot beams transmitted by one same communication node are preferably the same, so as to reduce the formation and transmission of information of a configuration difference and reduce the interaction of signalling.

During specific implementation, the configuration information or information of a configuration difference can be acquired by at least three methods as follows:

> method 1: extracting the configuration information or the information of a configuration difference from the received pilot beams; with this method, the configuration information or the configuration difference is received while the pilot beam is received.

> method 2: receiving the configuration information or the information of a configuration difference from the control signalling transmitted by the first communication node; in particular, the control signalling, for example, is transmitted through a broadcast channel or a multi-cast channel, so that multiple second communication nodes receive the configuration information or information of a configuration difference at the same time; with this method, step S120 might be executed before, after or concurrently with step S110;

> method 3: acquiring the configuration information or the information of a configuration difference according to a mapping relationship stored in advance between each of the pilot beams and a time-frequency resource used to transmit each of the pilot beams. With this method, the second communication node negotiates with the first communication node in advance; the second communication node receives the pilot beams on fixed time-frequency resources and can learn the configuration information of each type of the pilot beams or the information of a configuration difference between two types of pilot beams according to the mapping relationship. This method can reduce signalling overhead to the lowest.

The step S130 can calculate the boosting value of each type of the pilot beams according to the configuration information of any two types of the pilot beams or information of a configuration difference there-between. In particular, if the transmit power of pilot beam 1 is N1 watt, the transmit power of pilot beam 2 is N2 watt, it can be learned that the boosting value of the pilot beam 2 relative to the pilot beam 1 is N2-N1 watt. After receiving pilot beams, the second communication node can calculate the channel quality information corresponding to each type of the pilot beams according to the existing methods. When comparing the channel quality information of two types of pilot beams, it is needed to subtract the boosting value from the channel quality information of the pilot beam 2, and then compare the difference with the channel quality information of the pilot beam 2 to obtain a more accurate comparison result.

In the method described in this embodiment, according to different distribution locations of the second communication node in the first communication node, multiple pilot beams with different configurations are transmitted, so as to improve the power of the first communication node and the effective utilization of space resources. During specific implementation, after the second communication node selects one or more optimal pilot beams, the corresponding beam can be used to serve as the beam for communication. The second communication node can return the information such as index of the pilot beam so that the first communication node can determine the beam used to communicate with the second communication node in the following process.

Embodiment 2, according to the claimed invention:

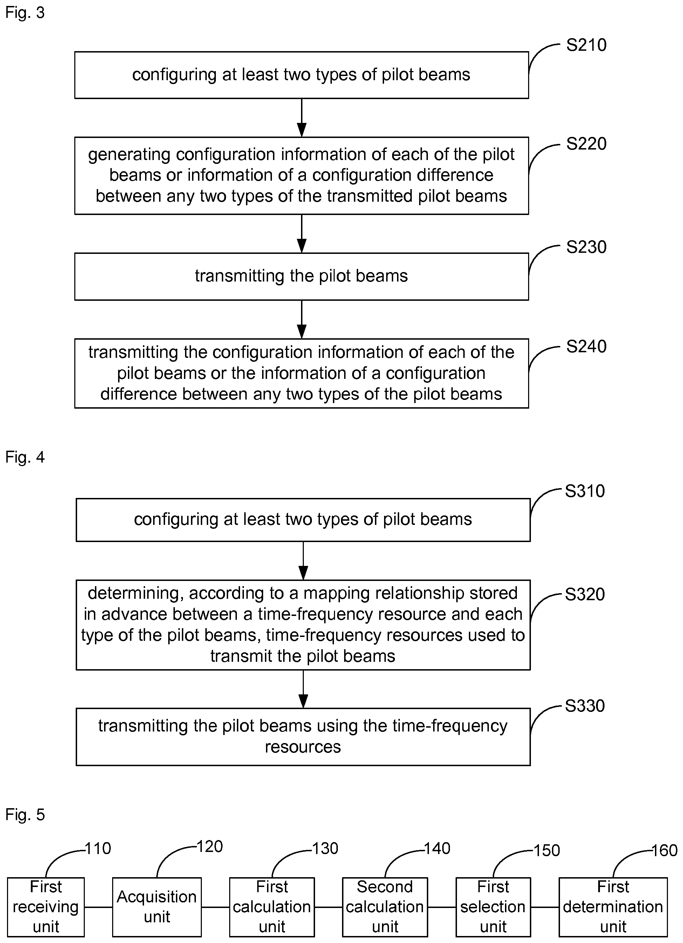

As shown in Fig. 3, this embodiment provides a method for transmitting a pilot beam, including:

> Step S210: configuring at least two types of pilot beams;
> Step S220: generating configuration information of each type of the pilot beams or information of a configuration difference between any two types of the transmitted pilot beams;
> Step S230: transmitting the pilot beams; and
> Step S240: transmitting the configuration information of each type of the pilot beams or the information of a configuration difference between any two types of the pilot beams.

In this embodiment the method for transmitting a pilot beam is described from the side of the first communication node. Relative to the existing technology, the pilot beams are classified into many types; many pilot beams are configured differently, moreover, the configuration information of each type of the pilot beams or the information of a configuration difference between any two types of the pilot beams is transmitted, so that the second communication node selects a beam and determines the beam information according to the configuration information or information of a configuration difference. During the specific implementation, the first communication node may receive the beam information fed back by the second communication node to perform beam-forming.

During implementation, step S220 may be or may be not executed at the same time, which depends on the transmitting manner of the configuration information or information of a configuration difference. Two transmitting manners are provided below:

> manner 1: bearing the configuration information or the information of a configuration difference in the pilot beams, and transmitting the configuration information or the information of a configuration difference together with the pilot beams; with this method, the pilot beams are transmitted together the configuration information or configurations.
> manner 2: bearing the configuration information or the information of a configuration difference on a control channel, which then transmits the configuration information or the information of a configuration difference; with this method, there is no fixed execution order for steps S220 and S230. When the configuration information or information of a configuration difference is transmitted through a control channel, the transmit frequency of the configuration information or information of a configuration difference is greater than or equal to that of the pilot beam. In particular, if pilot beam A is transmitted for N times within a specified duration, the corresponding configuration information needs to be transmitted once with respect to the N times of transmission of the pilot beams, where N is greater than or equal to 2. When the configuration information represents the configuration difference between any two types of the pilot beams, the information of a configuration difference may also be transmitted once within the specified time duration. After receiving the configuration information or information of a configuration difference, a terminal stores the configuration information or information of a configuration difference; when receiving a pilot beam, the terminal directly queries and acquires the configuration information or information of a configuration difference stored previously.

Specifically, the configuration information includes the absolute value of at least one of followings: the beam transmit power, the beam maximum gain, the beam width and the number of transmitted beams of the pilot beams;

the information of a configuration difference includes at least one of followings: the difference in the beam transmit power, the difference in the beam maximum gain, the difference in the beam width, the difference in the number of transmitted beams between any two types of the pilot beams.

In addition, in this embodiment, configuring at least two types of pilot beams specifically includes:

> configuring a pilot group, each pilot group includes N pilot beams, the N pilot beams including at least two types of pilot beams with different beam features, where N is an integer not smaller than 2, the beam features are the transmit power;
>
> generating configuration information of each of the pilot beams or information of a configuration difference between any two types of the transmitted pilot beams includes:
> generating configuration information of each of the pilot beams or information of a configuration difference between any two types of the pilot beams according to the beam feature of each of the pilot beams.

Preferably, each pilot group includes P pilot subgroups, where P is a positive integer;

> the pilot beams in each pilot subgroup have the same beam features;
> the pilot beams in different pilot subgroups have different beam features.

When pilot beams are transmitted, one or more pilot beams can be selected respectively from different pilot subgroups of one same pilot group and then transmitted. One same pilot beam can be transmitted adopting Time-Division Multiplexing (TDM), different pilot beams corresponding to different beam features can be transmitted adopting Code-Division Multiplexing (CDM) or Frequency-Division Multiplexing (FDM) at the same time. Here, the difference in beam features means the difference in transmit power, the difference in beam maximum gain and/or the difference in beam width.

Embodiment 3

As shown in Fig. 4, this embodiment provides a method for transmitting a pilot beam, including:

> Step S310: configuring at least two types of pilot beams;
>
> Step S320: determining, according to a mapping relationship stored in advance between a time-frequency resource and each type of the pilot beams, time-frequency resources used to transmit the pilot beams; and

Step S330: transmitting the pilot beams using the time-frequency resources.

Compared with the existing pilot beam transmission method, the pilot beam transmission method provided in this embodiment transmits more than two different pilot beams, each of which corresponds to a fixed time-frequency resource, so that the receiving end can acquire the configuration information of the pilot beam according to a mapping relationship between a pilot beam and a time-frequency resource, thereby effectively reducing signalling overhead. The mapping relationship is negotiated in advance by the first communication node and the second communication node through signal interaction, or may be preset in advance by a network management communication node and notified to the first communication node or the second communication node. The first communication node is a node to transmit a pilot beam, and the second communication node is a node to receive the pilot beam. Any two types of the pilot beams are different in at least one of following aspects: the beam transmit power, the beam maximum gain, the beam width and the number of transmitted beams.

In addition, in this embodiment, configuring at least two types of pilot beams specifically includes: configuring a pilot group, each pilot group includes N pilot beams, the N pilot beams including at least two types of pilot beams with different beam features, where N is an integer not smaller than 2, the beam features including the transmit power, the beam maximum gain, the beam width and/or the number of beams of the pilot beams.

Preferably, each pilot group includes P pilot subgroups, where P is a positive integer;

the pilot beams in each pilot subgroup have the same beam features;

the pilot beams in different pilot subgroups have different beam features.

When pilot beams are transmitted, one or more pilot beams can be selected respectively from different pilot subgroups of one same pilot group and then transmitted. One same pilot beam can be transmitted adopting TDM, different pilot beams corresponding to different beam features can be transmitted at the same time adopting CDM or FDM. Here, the difference in beam feature means the difference in transmit power, the difference in beam maximum gain and/or the difference in beam width.

Embodiment 4, according to the claimed invention: This embodiment provides a method for acquiring beam information, including:

a first communication node configures at least two types of pilot beams;

the first communication node forms configuration information of each of the pilot beams or information of a configuration difference between any two types of the transmitted pilot beams;

the first communication node transmits the pilot beams;

the first communication node transmits the configuration information of each type of the pilot beams or the information of a configuration difference between any two types of the pilot beams;

a second communication node receives at least one type of the pilot beams from the first communication node;

the second communication node acquires the configuration information of each type of the pilot beams or the information of a configuration difference between any two types of the received pilot beams;

the second communication node calculates boosting values of transmit power of any two types of the received pilot beams according to the configuration information or the information of a configuration difference;

the second communication node calculates channel quality information of the received pilot beams;

the second communication node selects a pilot beam according to the boosting values of transmit power and the channel quality information; and

the second communication node determines beam information according to the pilot beam.

In this embodiment, the first communication node refers to a node to transmit a pilot beam, which in particular can refer to the description of the first communication node in Embodiment 1; the second communication node refers to a communication node to receive the pilot beam and determine the beam information using the pilot beam, which generally is a mobile communication node and the structure of which in particular can refer to Embodiment 1.

This embodiment is combined with Embodiment 1 and Embodiment 2; the operation executed by the first communication node in this embodiment corresponds to any technical scheme described in the Embodiment 1; the operation executed by the second communication node corresponds to any technical scheme described in Embodiment 2. The method described in this embodiment can effectively optimize the power in the communication process and the utilization of space resources, and enhance the performance of wireless communication.

Embodiment 5

This embodiment provides a method for acquiring beam information, including:

a first communication node configures at least two types of pilot beams;

the first communication node determines time-frequency resources used to transmit the pilot beam according to a mapping relationship stored in advance between atime-frequency resource and each type of the pilot beams;

the first communication node transmits the pilot beams using the time-frequency resources;

a second communication node receives at least one type of the pilot beams from the first communication node;

the second communication node acquires configuration information of each type of the pilot beams or the information of a configuration difference between any two types of the received pilot beams;

the second communication node calculates boosting values of transmit power of any two types of the received pilot beams according to the configuration information or the information of a configuration difference;

the second communication node calculates channel quality information of the received pilot beams;

the second communication node selects a pilot beam according to the boosting value of transmit power and the channel quality information; and

the second communication node determines beam information according to the pilot beam.

In this embodiment, the first communication node refers to a node to transmit a pilot beam, which in particular can refer to the description of the first communication node in Embodiment 1; the second communication node refers to a communication node to receive the pilot beam and determine the beam information using the pilot beam, which generally is a mobile communication node and the structure of which in particular can refer to Embodiment 1.

This embodiment is combined with Embodiment 1 and Embodiment 3; the operation executed by the first communication node in this embodiment corresponds to any technical scheme described in the Embodiment 1; the operation executed by the second communication node corresponds to any technical scheme described in Embodiment 3. The method described in this embodiment can effectively optimize the power in the communication process and the utilization of space resources, and enhance the performance of wireless communication.

Embodiment 6

As shown in Fig. 5, this embodiment provides a communication node, which is a second communication node, including:

a first receiving unit 110, which is configured to receive at least one type of pilot beams from a first communication node;

an acquisition unit 120, which is configured to acquire configuration information of each type of the pilot beams or information of a configuration difference between any two types of the received pilot beams;

a first calculation unit 130, which is configured to calculate boosting values of transmit power of any two types of the received pilot beams according to the configuration information or the information of a configuration difference;

a second calculation unit 140, which is configured to calculate channel quality information of the received pilot beams;

a first selection unit 150, which is configured to select a pilot beam according to the boosting values of transmit power and the channel quality information; and

a first determination unit 160, which is configured to determine beam information according to the pilot beam.

The specific physical structure of the first receiving unit 110 might be a receiving antenna, which is configured to receive at least one type of pilot beams.

The physical structure of the acquisition unit 120 also might be a receiving antenna, which is configured to receive at least one kind of configuration information or information of a configuration difference, or the acquisition unit 120 might be a processor, which is configured to extract configuration information or information of a configuration difference according to a corresponding relationship between a pilot beam and a time-frequency resource. The processor might be a single-chip computer, a central processing unit, a digital processor or a programmable array or has other structures.

Both of the first calculation unit 130 and the second calculation unit 140 may correspond to a calculator or a calculating circuit having a calculation function, which is configured to calculate the boosting value or channel quality information.

The specific structure of the first selection unit 150 might include a comparator or an integration circuit having a comparison function and a subtracter, and is configured to compare the channel quality information of the received pilot beams; the subtracter is configured to subtract the difference in boosting values between two pilot beams from the pilot beam with a higher boosting value.

The specific structure of the first determination unit 160 also might be a processor, which is configured to extract from the pilot beam the information such as the index of the pilot beam so as to determine beam information.

In this embodiment the communication node corresponds to the second communication node mentioned in Embodiment 1 to Embodiment 5, that is, a mobile communication node or a terminal, which can be configured to implement any technical scheme described in Embodiment 1.

Preferably, the configuration information includes the absolute value of at least one of followings: the beam transmit power, the beam maximum gain, the beam width and the number of transmitted beams of the pilot beams;

the information of a configuration difference includes at least one of followings: the difference in the beam transmit power, the difference in the beam maximum gain, the difference in the beam width, the difference in the number of transmitted beams between any two types of the pilot beams.

The acquisition unit 120 specifically is configured to: extract the configuration information or the information of a configuration difference from the received pilot beams; or, receive the configuration information or the information of a configuration difference from the control signalling transmitted by the first communication node; or, acquire the configuration information or the information of a configuration difference according to a mapping relationship stored in advance between a pilot beam and a time-frequency resource used to transmit the pilot beam.

Embodiment 7

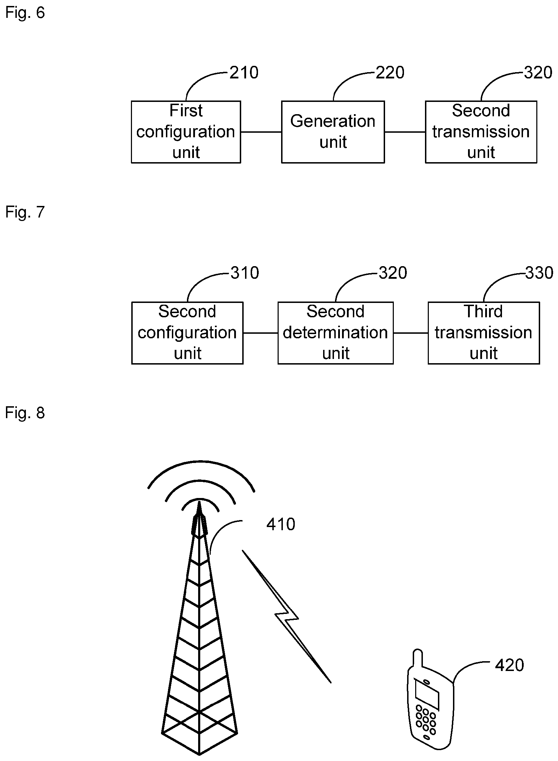

As shown in Fig. 6, this embodiment provides a communication node, which is a first communication node, including:

a first configuration unit 210, which is configured to configure at least two types of pilot beams;

a generation unit 220, which is configured to generate configuration information of each type of the pilot beams or information of a configuration difference between any two types of the transmitted pilot beams;

a second transmission unit 230, which is configured to transmit the pilot beams and the configuration information of each type of the pilot beams or the information of a configuration difference between any two types of the pilot beams.

The specific structure of the first configuration unit 210 might be a processor, which can configure different types of pilot beams by pre-coded matrix or by other processing.

The specific structure of the generation unit 220 also might be a processor, which can generate corresponding configuration information according to the configuration of pilot beams.

The specific structure of the second transmission unit 230 may correspond to a transmitting antenna or a transmitting antenna array.

The communication node mentioned in this embodiment refers to the first communication node, which provides a hardware structure to implement the method for transmitting a pilot beam described in Embodiment 2 and can be configured to implement any technical scheme described in Embodiment 2.

The second transmission unit 230 is configured to: bear the configuration information or the information of a configuration difference in the pilot beams and transmit it together with the pilot beams; or, bear the configuration information or the information of a configuration difference on a control channel, which then transmits the configuration information or the information of a configuration difference.

The processor in any one of the above function unit all can be a single-chip computer, a central processing unit, a digital processor or a programmable array or have other structures.

The configuration information includes the absolute value of at least one of followings: the beam transmit power, the beam maximum gain, the beam width and the number of transmitted beams of the pilot beams; the information of a configuration difference includes at least one of followings: the difference in the beam transmit power, the difference in the beam maximum gain, the difference in the beam width, the difference in the number of transmitted beams between any two types of the pilot beams.

In addition, the first configuration unit 210 is configured to configure at least one pilot group, each pilot group includes N pilot beams, the N pilot beams including at least two types of pilot beams with different beam features, where N is an integer not smaller than 2, the beam features including the transmit power, the beam maximum gain, the beam width and/or the number of beams of the pilot beams;

the generation unit 220 is configured to generate configuration information of each of the pilot beams or information of a configuration difference between any two types of the pilot beams according to the beam feature of each of the pilot beams. Each of the pilot groups includes P pilot subgroups, where P is a positive integer; the pilot beams in each pilot subgroup have the same beam features; the pilot beams in different pilot subgroups have different beam features.

Embodiment 8

As shown in Fig. 7, this embodiment provides a communication node, which is a first communication node, including:

a second configuration unit 310, which is configured to configure at least two types of pilot beams, wherein any two types of the pilot beams are different in at least one of followings: the beam transmit power, the beam maximum gain, the beam width and the number of transmitted beams.

a determination unit 320, which is configured to determine a time-frequency resource used to transmit a pilot beam according to a mapping relationship stored in advance between a time-frequency resource and each pilot beam,

a third transmission unit 330, which is configured to transmit the pilot beam using the time-frequency resource.

The specific structure of the second configuration unit 310 might be a processor, which can configure different types of pilot beams by pre-coded matrix or other processing.

The specific structure of the second determination unit 320 also might be a processor and a storage medium, wherein the storage medium stores a mapping relationship between a pilot beam and a time-frequency resource; the processor reads the mapping relationship from the storage medium, specifying a subframe and/or a timeslot used to transmit the pilot beam in the a wireless frame.

The specific structure of the third transmission unit 330 may correspond to a transmitting antenna or a transmitting antenna array.

Preferably, the second configuration unit 310 is configured to configure a pilot group, each pilot group includes N pilot beams, the N pilot beams including at least two types of pilot beams with different beam features, where N is an integer not smaller than 2, the beam features including the transmit power, the beam maximum gain, the beam width and/or the number of beams of the pilot beams, wherein each pilot group includes P pilot subgroups, where P is a positive integer; the pilot beams in each pilot subgroup have the same beam features; the pilot beams in different pilot subgroups have different beam features.

The communication node mentioned in this embodiment refer to the first communication node, which provides a hardware structure to implement the method for transmitting a pilot beam described in Embodiment 3 and can be configured to implement any technical scheme described in Embodiment 3. The processor in any one of the above function unit all can be a single-chip computer, a central processing unit, a digital processor or a programmable array and other structures.

Embodiment 9

As shown in Fig. 8, this embodiment provides a communication system, including:

a first communication node 410, which is configured to configure at least two types of pilot beams, form configuration information of each type of the pilot beams or information of a configuration difference between any two types of the transmitted pilot beams, transmit the pilot beams, and transmit the configuration information of each type of the pilot beams or the information of a configuration difference between any two types of the pilot beams; and

a second communication node 420, which is configured to receive at least one of the pilot beams transmitted by the first communication node, acquire the configuration information of each type of the pilot beams or the information of a configuration difference between any two types of the received pilot beams, calculate boosting values of transmit power of any two types of the received pilot beams according to the configuration information or the information of a configuration difference, calculate channel quality information of the received pilot beams, select a pilot beam according to the boosting value of transmit power and the channel quality information and determine beam information according to the pilot beam.

The specific structure of the first communication node can refer to Embodiment 8; the structure of the second communication node can refer to Embodiment 7. The communication system described in this embodiment provides a specific structure to implement the method for acquiring beam information described in Embodiment 4, and can be configured to implement any technical scheme described in Embodiment 4, so as to effectively improve the power of the existing communication system and/or utilization of space resources.

Embodiment 10

This embodiment provides a communication system, including:

a first communication node, which is configured to configure at least two types of pilot beams, determine time-frequency resources used to transmit the pilot beams according to a mapping relationship stored in advance between a time-frequency resource and each type of the pilot beams, and transmit the pilot beams using the time-frequency resources; and

a second communication node, which is configured to receive at least one type of the pilot beams from the first communication node, acquire configuration information of each type of the pilot beams or the information of a configuration difference between any two types of the received pilot beams, calculate boosting values of transmit power of any two types of the received pilot beams according to the configuration information or the information of a configuration difference, calculate channel quality information of the received pilot beams, select a pilot beam according to the boosting value of transmit power and the channel quality information, and determine beam information according to the pilot beam.

The specific structure of the first communication node can refer to Embodiment 9; the structure of the second communication node can refer to Embodiment 7. The communication system described in this embodiment provides a specific structure to implement the method for acquiring beam information described in Embodiment 5, and can be configured to implement any technical scheme described in Embodiment 5, so as to effectively improve the power of the existing communication system and/or utilization of space resources.

The present disclosure also provides a computer storage medium, which stores computer executable instructions that are configured to execute at least one or more of the technical schemes described in Embodiment 1 to Embodiment 5, in particular, for example, to execute the method described in any one of Fig. 2, Fig. 3 and/or Fig. 4. The computer storage medium might be magnetic tape, compact disc, DVD, USB flash disk or mobile hard disk and other storage mediums. The computer storage medium preferably selects a non-instant storage medium.

Several specific application examples are provided below in combination with the technical scheme described in the embodiments of the present disclosure.

Example 1

In this example, the first communication node is a base station; the second communication node is a mobile terminal; the base station is provided with $N_t$ antennas or array subunits. The base station transmits a pilot signal in $M$ measurement pilot beams using the antennas or array subunits. The terminal receives and measures channel information of the pilot signal in the $M$ measurement pilot beams transmitted from the base station to the terminal, and calculates channel quality information corresponding to the $M$ measurement pilot beams according to the channel information, selects $N_p$ pilots with best channel quality as a pilot group, where $1 \leq N_p \leq M$, $N_p$ and M are integers. The base station configures multiple pre-coded matrixes, and the pre-coded

matrixes can map $N_t$ antennas or array subunits to $N_p$ ports to form beams in $N_p$ transmitting directions. The transmit power of the beams in $N_p$ transmitting directions might be the same or different. The base station divides the pilot group into $N_0$ subgroups; the number of pilots/ports in each subgroup is $N_i$, where $N_0$ and $N_i$, $i=1, ..., N_0$ are integers greater than or equal to 1, and

$$\sum_{i=1}^{N_0} N_i = N_p .$$

The base station maps a signal transmitted on the $N_t$ antennas or array subunits to the *jth* port using the *jth* pre-coded matrix on the *jth* pilot in the pilot group, to form a beam in the *jth* direction, wherein the transmit power of the beam in the *jth* direction is $P_j$, $j= 1,...,N_p$. The beam transmit power in one same pilot subgroup is the same, while the beam transmit power in different pilot subgroups is different. The base station transmits pilot beams with different transmit power to a terminal through a pilot beam transmitter.

The base station transmits configuration information or information of a configuration difference to a terminal through a signalling configuration device. For example, a pilot in the first pilot group adopt normal beam transmit power, the information of a configuration difference of each pilot subgroup is a difference in beam transmit power between this pilot subgroup and the first pilot subgroup, so as to implement the transmission of the configuration information or the information of a configuration difference.

Or, the base station does not transmit configuration information or information of a configuration difference, the terminal and the base station agree on the beam transmit power of the *jth* pilot beam in advance; the base station transmits the *jth* pilot beam on the specified time-frequency resource, the terminal can learn the configuration information of the pilot beam according to the agreement when receiving the pilot beam.

After the terminal receives the *jth* pilot beam transmitted by the base station and acquires the configuration information or information of a configuration difference, the terminal calculates the boosting value $Dj$ of transmit power of the pilot beam, calculates the channel quality information $CQI'_j$ corresponding to the pilot beam according to the *jth* pilot beam, wherein the compared channel quality information in the beam direction corresponding to the *jth* pilot is $CQI_j = CQI'_j -D_j$. The terminal selects the beam with the maximum $CQI_j$ as the first-level beam. After the terminal selects the pilot beam, it acquires beam information of this pilot beam and feeds back the acquired beam information to the base station to perform beam-forming.

During specific implementation, the difference in configuration between different pilot beams refers to a difference in beam maximum gain, in beam width, in the number of the same type of pilot beams transmitted within one same period and/or the number of beam transmission times within a specified time.

Example 2

In this example, supposing the first communication node is a base station and the second communication node is a mobile terminal; the base station is provided with $N_t$ antennas or array subunits. The base station transmits a pilot signal in M measurement pilot beams. The terminal measures channel information of the pilot signal in the M measurement pilot beams transmitted from the base station to the terminal, and calculates the channel quality information corresponding to the M measurement pilot beams according to the channel information, selects $N_p$ pilots with best channel quality as a pilot group, where $1 \leq N_p \leq M$, $N_p$ and M are integers. The base station configures multiple pre-coded matrixes, and the pre-coded matrixes can map $N_t$ antennas or array subunits to $N_p$ ports to form beams in $N_p$ directions. The beam features in $N_p$ directions, that is, the beam maximum gain, might be the same or different. The base station divides the pilot group into $N_0$ subgroups; the number of pilots/ports in each subgroup is $N_i$, where $N_0$ and $N_i$, $i=1, ..., N_0$ are integers greater than or equal to 1, and $\sum_{i=1}^{N_0} N_i = N_p$.

The base station maps a signal transmitted on the $N_t$ antennas or array subunits to the *jth* port using the *jth* pre-coded matrix on the *jth* pilot in the pilot group, to form a beam in the *jth* direction, wherein the maximum gain of the beam in the *jth* direction is $G_j$, $j= 1,...,N_p$. The beam maximum gain in one same pilot subgroup is the same, while the beam maximum gains in different pilot subgroups are different. The base station transmits beams with different beam maximum gains to a terminal through a pilot beam transmitter. The beam maximum gains of different pilot subgroups are notified to the terminal through configuration information or information of a configuration difference.

The base station transmits signalling about a beam maximum gain relationship between pilots at different positions in the pilot group through a signalling configuration device. For example, the pilots in the first subgroup adopt normal beam maximum gain, the signalling in each pilot subgroup represents a difference in beam maximum gain between this pilot subgroup and the first pilot subgroup, or implicitly, both the base station and the terminal agree on the beam maximum gain used by the beam transmitted by the *jth* pilot.

The terminal receives, from the base station, the beam signal transmitted by the *jth* pilot and the configuration signalling of a beam maximum gain relationship. According to the difference in beam maximum gain between the pilot subgroup in which the *jth* pilot is located and the first pilot subgroup, or according to the index of the pilot subgroup in which the *jth* pilot is located, the terminal calculates the boosting value $Dj$ of transmit power of the pilot beam, calculates the channel quality information $CQI'_j$ corresponding to the pilot beam according to the beam signal transmitted by the *jth* pilot, wherein the final channel quality information in the beam direction corresponding to the *jth* pilot is $CQI_j = CQI'_j - D_j$. The terminal selects the beam with the maximum $CQI_j$ as the first-level beam.

Example 3

In this example, supposing the first communication node is a base station and the second communication node is a mobile terminal; the base station is provided with $N_t$ antennas or array subunits. The base station transmits a pilot signal in $M$ measurement pilot beams. The terminal measures channel information of the pilot signal in the $M$ measurement pilot beams transmitted from the base station to the terminal, and calculates the channel quality information corresponding to the M measurement pilot beams according to the channel information, selects $N_p$ pilots with best channel quality as a pilot group, where $1 \leq N_p \leq M$, $N_p$ and M are integers. The base station configures multiple pre-coded matrixes, and the pre-coded matrixes can map $N_t$ antennas or array subunits to $N_p$ ports to form beams in $N_p$ directions. The beam features in $N_p$ directions, that is, the beam width, might be the same or different. The base station divides the pilot group into $N_0$ subgroups; the number of pilots/ports in each subgroup is $N_i$, where $N_0$ and $N_i$, $i=1, ..., N_0$ are integers greater than or equal to 1, and $\sum_{i=1}^{N_0} N_i = N_p$.

The base station maps a signal transmitted on the $N_t$ antennas or array subunits to the *jth* port using the *jth* pre-coded matrix on the *jth* pilot in the pilot group, to form a beam in the *jth* direction, wherein the beam width in the *jth* direction is $BW_j$, $j=1,...,N_p$. The beam width in one same pilot subgroup is the same, while the beam widths in different pilot subgroups are different. The base station transmits beams with different beam widths to a terminal through a pilot beam transmitter. The beam widths of different pilot subgroups are notified to the terminal through configuration information or information of a configuration difference.

The base station transmits signalling about a beam width relationship between pilots at different positions in the pilot group through a signalling configuration device. For example, the pilots in the first subgroup adopt normal beam width, the signalling in each pilot subgroup represents a difference in beam width between this pilot subgroup and the first pilot subgroup, or implicitly, both the base station and the terminal agree on the beam width used by the beam transmitted by the *jth* pilot.

The terminal receives, from the base station, the beam signal transmitted by the *jth* pilot and the configuration signalling of a beam width relationship. The terminal calculates the real beam width of the pilot according to the difference in beam width between the pilot subgroup in which the *jth* pilot is located and the first pilot subgroup and according to the beam width of the first pilot subgroup, or, the terminal calculates the real beam width of the pilot according to the index of the pilot subgroup in which the jth pilot is located; then the terminal calculates the boosting value Dj of this beam relative to the normal transmit power according to the real width, calculates the channel quality information $CQI'_j$ corresponding to the beam according to the beam signal transmitted by the *jth* pilot, wherein the final channel quality information in the beam direction corresponding to the jth pilot is $CQ_j = CQI'_j -D_j$. The terminal selects the beam with the maximum $CQI_j$ as the first-level beam.

Example 4

In this example, supposing the first communication node is a base station and the second communication node is a mobile terminal; the base station is provided with $N_t$ antennas or array subunits. The base station transmits a pilot signal in $M$ measurement pilot beams. The terminal measures channel information of the pilot signal in the $M$ measurement pilot beams transmitted from the base station to the terminal, and calculates channel quality information corresponding to the M measurement pilot beams according to the channel information, selects $N_p$ pilots with best channel quality as a pilot group, where $1 \leq N_p \leq M$, $N_p$ and M are integers. The base station configures multiple pre-coded matrixes, and the pre-coded matrixes can map $N_t$ antennas or array subunits to $N_p$ ports to form beams in $N_p$ directions. The beam features in $N_p$ directions, that is, the number of beams transmitted at the same time, might be the same or different. The base station divides the pilot group into $N_0$ subgroups; the number of pilots/ports in each subgroup is $N_i$, where $N_0$ and $N_i$, $i=1, ..., N_0$ are integers greater than or equal to 1, and $\sum_{i=1}^{N_0} N_i = N_p$ .

The base station maps a signal transmitted on the $N_t$ antennas or array subunits to the *jth* port using the *jth* pre-coded matrix on the *jth* pilot in the pilot group, to form a beam in the *jth* direction, $j=1,...,N_p$. The beam in the *jth* direction might be transmitted at the same time as beams in directions at other pilot positions in the pilot subgroup, so that multiple beams can be transmitted at the same time, wherein the pilots for transmitting multiple beams may adopt frequency-division multiplexing (FDM) or Code-division multiplexing (CDM), while the pilots for transmitting one beam adopts Time-division multiplexing (TDM). The number of beams in one same pilot subgroup is the same, while the numbers of beams in different pilot subgroups are different. The base station transmits beams with different beam amounts to a terminal through a pilot beam transmitter.

The base station transmits signalling about the beam number relationship between pilots at different positions in the pilot group through a signalling configuration device. For example, the pilots in the first subgroup adopt the manner that each pilot transmits only one beam at the same time, while the signalling in each pilot subgroup represents a difference in the number of beams between this pilot subgroup and the first pilot subgroup, or implicitly, both the base station and the terminal agree on the number of beams used by the beam transmitted by the *jth* pilot subgroup.

The terminal receives, from the base station, the beam signal transmitted by the *jth* pilot and the configuration signalling of a beam number relationship. The terminal calculates the real beam number of the pilot according to the difference in beam number between the pilot subgroup in which the *jth* pilot is located and the first pilot subgroup and according to the beam number of the first pilot subgroup, or, the terminal calculates the real beam number of the pilot beam according to the index of the pilot subgroup in which the *jth* pilot is located, or according to the multiplexing manner of the pilot subgroup: when the TDM manner is adopted, the beam amount is 1; when the FDM manner is adopted, the beam amount is the pilot amount in the frequency domain during FDM; when the CDM is adopted, the beam amount is the code length. Then the terminal calculates the boosting value Dj of the beam relative to the normal transmit power according to number of beams multiplexed simultaneously, calculates the channel quality information $CQI'_j$ corresponding to the beam according to the beam signal transmitted by the *jth* pilot, wherein the final channel quality information in the beam direction corresponding to the *jth* pilot is $CQI_j = CQI'_j -D_j$. The terminal selects the beam with the maximum $CQI_j$ as the first-level beam.

Example 5

In this example, supposing the first communication node is a base station and the second communication node is a mobile terminal; the base station is provided with $N_t$ antennas or array subunits. The base station transmits a pilot signal in $M$ measurement pilot beams. The terminal measures the channel information of the pilot signal in the $M$ measurement pilot beams transmitted from the base station to the terminal, and calculates the channel quality information corresponding to the $M$ measurement pilot beams according to the channel information, selects $N_p$ pilots with best channel quality as a pilot group, where $1 \leq N_p \leq M$, $N_p$ and M are integers. The base station configures multiple pre-coded matrixes, and the pre-coded matrixes can map $N_t$ antennas or array subunits to $N_p$ ports to form beams in $N_p$ directions. The beam features in $N_p$ directions, that is, the number of times of beam transmission, might be the same or different. The base station divides the pilot group into $N_0$ subgroups; the number of pilots/ports in each subgroup is $N_i$, where $N_0$ and $N_i$, $i=1, ..., N_0$ are integers greater than or equal to 1, and $\sum_{i=1}^{N_0} N_i = N_p$ .

The base station maps a signal transmitted on the $N_t$ antennas or array subunits to the *jth* port using the *jth* pre-coded matrix on the *jth* pilot in the pilot group, to form a beam in the *jth* direction, wherein the number of transmission times of beams in the $jth$ direction is $NT_j$, $j=1,...,N_p$. The number of transmission times of beams in one same pilot subgroup is the same, while the numbers of transmission times of beams in different pilot subgroups is different. The base station transmits beams with different numbers of transmission times of beams to a terminal through a pilot beam transmitter.

The base station transmits the signalling about a relationship about the number of transmission times of beams between pilots at different positions in the pilot group through a signalling configuration device. For example, the pilots in the first subgroup adopt one transmission time which is normal, while the signalling in each pilot subgroup represents a difference in the number of transmission times of beams between this pilot subgroup and the first pilot subgroup, or implicitly, both the base station and the terminal agree on the number of transmission times of beams transmitted by the $jth$ pilot. The signalling representing the difference in beam feature between different pilot subgroups is one of the configuration information and the information of a configuration difference.

The terminal receives the beam signal transmitted by the $jth$ pilot and the configuration signalling of the relationship about the number of transmission times of beams transmitted by the base station. According to the difference in the number of transmission times of beams between the pilot subgroup in which the $jth$ pilot is located and the first pilot subgroup, and according to the number of transmission times of beams of the first pilot subgroup, the terminal calculates the real number of transmission times of beams of the pilot; or, according to the index of the pilot subgroup in which the jth pilot is located, the terminal calculates the real number of transmission times of beams of the pilot beam; then the terminal calculates the boosting value $Dj$ of this beam relative to the normal transmit power according to the real number of transmission times of beams, calculates the channel quality information $CQI'_j$ corresponding to the beam according to the beam signal transmitted by the $jth$ pilot, wherein the final channel quality information in the beam direction corresponding to the $jth$ pilot is $CQI_j = CQI'_j - D_j$. The terminal selects the beam with the maximum $CQI_j$ as the first-level beam.

In the embodiments provided in this application, it should be understood that the device and method can be realized through other ways. The device embodiments described above are exemplary only, for example, the division of units is a division of logical functions only, which can select other division methods in actual implementation, for example, the combination of multiple units or components, or integrated into another system, or some feature might be neglected or not executed. In addition, the mutual coupling, or direct coupling, or communication link between the displayed or discussed components might be realized through some interfaces; the direct coupling or communication link between devices or units might be electrically, mechanically or other forms.

The above units described as separate components might be or might not be physically separated; the component, displayed as a unit, might be or might not be a physical unit, that is, it might be located at one place, or might be distributed on multiple network units. Part of or all units can be selected to realize the purpose of the embodiment schemes according to actual needs.

In addition, each function unit in each embodiment of the present disclosure might be integrated in a processing module, or each unit serves as a unit separately, or two or more units are integrated in a unit. The above integrated units can be realized in the form of hardware, or in the form of hardware plus software function unit.

The ordinary skilled person in this field can understand that: part of or all steps to implement the above method embodiments can be completed through a program instructing related hardware, the program is stored in a computer readable storage medium and executes the steps of the above method embodiments during execution. The storage medium includes: a mobile storage device, a Read-Only Memory (ROM), a Random Access Memory (RAM), a disk or a compact disk and other mediums capable of storing program codes.

## Claims

1. A method for determining beam information, comprising:

configuring, by a first communication node, a pilot group including N pilot beams, wherein the N pilot beams include at least two types of pilot beams with different beam features, the pilot group includes P pilot subgroups, pilot beams in each of the pilot subgroups have same beam features, pilot beams in different pilot subgroups have different beam features, where N is an integer not smaller than 2, P is a positive integer, and the beam features are a transmit power;
generating, by the first communication node, configuration information of each type of the N pilot beams or configuration difference information of any two types of the N pilot beams according to the beam feature of each of the pilot beams;
selecting, by the first communication node, one or more pilot beams respectively from different pilot subgroups of the pilot group;
transmitting, by the first communication node, the selected pilot beams;
transmitting, by the first communication node, the configuration information of each type of the pilot beams or the configuration difference information of any two types of the pilot beams;
receiving, by the second communication node, at least one type of the pilot beams transmitted by the first communication node;
acquiring, by the second communication node, the configuration information or the configuration difference information;
calculating, by the second communication node, boosting values of transmit power of any two types of the received pilot beams according to the configuration information or the configuration difference information;
calculating, by the second communication node, channel quality information of the received pilot beams; and
selecting, by the second communication node, a pilot beam according to the boosting values of the transmit power and the channel quality information;
determining, by the second communication node, beam information according to the selected pilot beam, and returning the determined beam information to the first communication node.

2. The method according to claim 1, wherein transmitting, by the first communication node, the configuration information of each of the selected pilot beams or the configuration difference information of any two of the selected pilot beams comprises:

bearing the configuration information or the configuration difference information in the selected pilot beams, and transmitting the configuration information or the configuration difference information together with the selected pilot beams, or bearing the configuration information or the configuration difference information on a control channel, and transmitting the configuration information or the configuration difference information through the control channel.

3. The method according to claim 2, wherein when bearing the configuration information or the configuration difference information on the control channel through which the configuration information or the configuration difference information is then transmitted, one time of transmission of the configuration information corresponds to multiple times of transmission of a same pilot beam, one time of transmission of the configuration difference information corresponds to multiple times of transmission of the same two pilot beams.

4. A communication system, comprising:

a first communication node, which is configured to configure a pilot group including N pilot beams, generate configuration information of each type of the N pilot beams or configuration difference information of any two types of the N pilot beams according to a beam feature of each of the pilot beams, select one or more pilot beams respectively from different pilot subgroups of the pilot group, and transmit the selected pilot beams, and the configuration information of each type of the pilot beams or the configuration difference information of any two types of the pilot beams, wherein the N pilot beams include at least two types of pilot beams with different beam features, the pilot group includes P pilot subgroups, pilot beams in each of the pilot subgroups have same beam features, pilot beams in different pilot subgroups have different beam features, where N is an integer not smaller than 2, P is a positive integer, and the beam features are a transmit power; and a second communication node, which is configured to receive at least one type of the pilot beams transmitted by the first communication node, acquire the configuration information or the configuration difference information, calculate boosting values of transmit power of any two types of the received pilot beams according to the configuration information or the configuration difference information, and calculate channel quality information of the received pilot beams, and select a pilot beam according to the boosting values of the transmit power and the channel quality information.

5. The communication system according to claim 4, wherein the first communication node is further configured to:

bear the configuration information or the configuration difference information in the selected pilot beams and transmit the configuration information or the configuration difference information together with the selected pilot beams, or bear the configuration information or the configuration difference information on a control channel, through which the configuration information or the configuration difference information is then transmitted.

6. A computer storage medium, which stores computer executable instructions that are configured to execute the method according to at least one of claims 1 to 3.

**Patentansprüche**

1. Verfahren zum Bestimmen von Strahlinformationen, umfassend:

Konfigurieren, durch einen ersten Kommunikationsknoten, einer Pilotgruppe, die N Pilotstrahlen einschließt, wobei die N Pilotstrahlen mindestens zwei Typen von Pilotstrahlen mit unterschiedlichen Strahlmerkmalen einschließen, die Pilotgruppe P Pilotuntergruppen einschließt, Pilotstrahlen in jeder der Pilotuntergruppen gleiche Strahlmerkmale aufweisen, Pilotstrahlen in unterschiedlichen Pilotuntergruppen unterschiedliche Strahlmerkmale aufweisen, wobei N eine ganze Zahl nicht kleiner als 2 ist, P eine positive ganze Zahl ist und die Strahlmerkmale eine Übertragungsleistung sind;

Erzeugen, durch den ersten Kommunikationsknoten, von Konfigurationsinformationen jedes Typs der N Pilotstrahlen oder Konfigurationsdifferenzinformationen von beliebigen zwei Typen der N Pilotstrahlen gemäß dem Strahlmerkmal jedes der Pilotstrahlen;

Auswählen, durch den ersten Kommunikationsknoten, eines oder mehrerer Pilotstrahlen jeweils aus unterschiedlichen Pilotuntergruppen der Pilotgruppe;

Übertragen, durch den ersten Kommunikationsknoten, der ausgewählten Pilotstrahlen;

Übertragen, durch den ersten Kommunikationsknoten, der Konfigurationsinformationen jedes Typs der Pilotstrahlen oder der Konfigurationsdifferenzinformationen von beliebigen zwei Typen der Pilotstrahlen;

Empfangen, durch den zweiten Kommunikationsknoten, mindestens eines Typs der Pilotstrahlen, die durch den ersten Kommunikationsknoten übertragen werden;

Erfassen, durch den zweiten Kommunikationsknoten, der Konfigurationsinformationen oder der Konfigurationsdifferenzinformationen;

Berechnen, durch den zweiten Kommunikationsknoten, von Verstärkungswerten der Übertragungsleistung von beliebigen zwei Typen der empfangenen Pilotstrahlen gemäß den Konfigurationsinformationen oder den Konfigurationsdifferenzinformationen;

Berechnen, durch den zweiten Kommunikationsknoten, von Kanalqualitätsinformationen der empfangenen Pilotstrahlen; und

Auswählen, durch den zweiten Kommunikationsknoten, eines Pilotstrahls gemäß den Verstärkungswerten der Übertragungsleistung und den Kanalqualitätsinformationen;

Bestimmen, durch den zweiten Kommunikationsknoten, von Strahlinformationen gemäß dem ausgewählten Pilotstrahl und Zurückgeben der bestimmten Strahlinformationen an den ersten Kommunikationsknoten.

2. Verfahren nach Anspruch 1, wobei das Übertragen, durch den ersten Kommunikationsknoten, der Konfigurationsinformationen jedes der ausgewählten Pilotstrahlen oder der Konfigurationsdifferenzinformationen von beliebigen zwei der ausgewählten Pilotstrahlen umfasst:

Tragen der Konfigurationsinformationen oder der Konfigurationsdifferenzinformationen in den ausgewählten Pilotstrahlen und Übertragen der Konfigurationsinformationen oder der Konfigurationsdifferenzinformationen zusammen mit den ausgewählten Pilotstrahlen, oder

Tragen der Konfigurationsinformationen oder der Konfigurationsdifferenzinformationen auf einem Steuerkanal und Übertragen der Konfigurationsinformationen oder der Konfigurationsdifferenzinformationen über den Steuerkanal.

3. Verfahren nach Anspruch 2, wobei, wenn die Konfigurationsinformationen oder die Konfigurationsdifferenzinformationen auf dem Steuerkanal getragen werden, über den die Konfigurationsinformationen oder die Konfigurationsdifferenzinformationen dann übertragen werden, eine Übertragungszeit der Konfigurationsinformationen mehreren Übertragungszeiten eines gleichen Pilotstrahls entspricht, eine Übertragungszeit der Konfigurationsdifferenzinformationen mehreren Übertragungszeiten der gleichen zwei Pilotstrahlen entspricht.

4. Kommunikationssystem, umfassend:

einen ersten Kommunikationsknoten, der konfiguriert ist, um eine Pilotgruppe, die N Pilotstrahlen einschließt, zu konfigurieren, Konfigurationsinformationen jedes Typs der N Pilotstrahlen oder Konfigurationsdifferenzinformationen von beliebigen zwei Typen der N Pilotstrahlen gemäß einem Strahlmerkmal jedes der Pilotstrahlen zu erzeugen, einen oder mehrere Pilotstrahlen jeweils aus unterschiedlichen Pilotuntergruppen der Pilotgruppe auszuwählen und die ausgewählten Pilotstrahlen und die Konfigurationsinformationen jedes Typs der Pilotstrahlen oder die Konfigurationsdifferenzinformationen von beliebigen zwei Typen der Pilotstrahlen zu übertragen, wobei die N Pilotstrahlen mindestens zwei Typen von Pilotstrahlen mit unterschiedlichen Strahlmerkmalen einschließen, die Pilotgruppe P Pilotuntergruppen einschließt, Pilotstrahlen in jeder der Pilotuntergruppen gleiche Strahlmerkmale aufweisen, Pilotstrahlen in unterschiedlichen Pilotuntergruppen unterschiedliche Strahlmerkmale aufweisen, wobei N eine ganze Zahl nicht kleiner als 2 ist, P eine positive ganze Zahl ist und die Strahlmerkmale eine Übertragungsleistung sind; und

einen zweiten Kommunikationsknoten, der konfiguriert ist, um mindestens einen Typ der Pilotstrahlen, die durch den ersten Kommunikationsknoten übertragen werden, zu empfangen, die Konfigurationsinformationen oder die Konfigurationsdifferenzinformationen zu erfassen, Verstärkungswerte der Übertragungsleistung von beliebigen zwei Typen der empfangenen Pilotstrahlen gemäß den Konfigurationsinformationen oder den Konfigurationsdifferenzinformationen zu berechnen und Kanalqualitätsinformationen der empfangenen Pilotstrahlen zu berechnen und einen Pilotstrahl gemäß den Verstärkungswerten der Übertragungsleistung und den Kanalqualitätsinformationen auszuwählen.

5. Kommunikationssystem nach Anspruch 4, wobei der erste Kommunikationsknoten ferner konfiguriert ist, um:

die Konfigurationsinformationen oder die Konfigurationsdifferenzinformationen in den ausgewählten Pilotstrahlen zu tragen und die Konfigurationsinformationen oder die Konfigurationsdifferenzinformationen zusammen mit den ausgewählten Pilotstrahlen zu übertragen, oder

die Konfigurationsinformationen oder die Konfigurationsdifferenzinformationen auf einem Steuerkanal zu tragen, über den die Konfigurationsinformationen oder die Konfigurationsdifferenzinformationen dann übertragen werden.

6. Computerspeichermedium, das computerausführbare Anweisungen speichert, die zum Ausführen des Verfahrens nach mindestens einem der Ansprüche 1 bis 3 konfiguriert sind.

**Revendications**

1. Procédé pour déterminer des informations de faisceau, comprenant les étapes consistant à :

configurer, par un premier nœud de communication, un groupe pilote incluant N faisceaux pilotes, dans lequel les N faisceaux pilotes incluent au moins deux types de faisceaux pilotes avec différentes caractéristiques de faisceau, le groupe pilote inclut P sous-groupes pilotes, des faisceaux pilotes dans chacun des sous-groupes pilotes ont les mêmes caractéristiques de faisceau, des faisceaux pilotes dans différents sous-groupes pilotes ont différentes caractéristiques de faisceau, où N est un nombre entier non inférieur à 2, P est un nombre entier positif, et les caractéristiques de faisceau sont une puissance de transmission ;
générer, par le premier nœud de communication, des informations de configuration de chaque type des N faisceaux pilotes ou des informations de différence de configuration de deux types quelconques des N faisceaux pilotes selon la caractéristique de faisceau de chacun des faisceaux pilotes ;
sélectionner, par le premier nœud de communication, un ou plusieurs faisceaux pilotes respectivement à partir de différents sous-groupes pilotes du groupe pilote ;
envoyer, par le premier nœud de communication, les faisceaux pilotes sélectionnés ;
envoyer, par le premier nœud de communication, les informations de configuration de chaque type des faisceaux pilotes ou les informations de différence de configuration de deux types quelconques des faisceaux pilotes ;
recevoir, par le second nœud de communication, au moins un type des faisceaux pilotes envoyés par le premier nœud de communication ;
acquérir, par le second nœud de communication, les informations de configuration ou les informations de différence de configuration ;
calculer, par le second nœud de communication, des valeurs d'amplification de puissance de transmission de deux types quelconques des faisceaux pilotes reçus selon les informations de configuration ou les informations de différence de configuration ;
calculer, par le second nœud de communication, des informations de qualité de canal des faisceaux pilotes reçus ; et
sélectionner, par le second nœud de communication, un faisceau pilote selon les valeurs d'amplification de la puissance de transmission et les informations de qualité de canal ;
déterminer, par le second nœud de communication, des informations de faisceau selon le faisceau pilote sélectionné, et renvoyer les informations de faisceau déterminées au premier nœud de communication.

2. Procédé selon la revendication 1, dans lequel l'étape consistant à envoyer, par le premier nœud de communication, les informations de configuration de chacun des faisceaux pilotes sélectionnés ou les informations de différence de configuration de deux quelconques des faisceaux pilotes sélectionnés comprend les étapes consistant à :

porter les informations de configuration ou les informations de différence de configuration dans les faisceaux pilotes sélectionnés, et envoyer les informations de configuration ou les informations de différence de configuration conjointement avec les faisceaux pilotes sélectionnés, ou
porter les informations de configuration ou les informations de différence de configuration sur un canal de contrôle, et envoyer les informations de configuration ou les informations de différence de configuration par l'intermédiaire du canal de contrôle.

3. Procédé selon la revendication 2, dans lequel, lors du portage des informations de configuration ou des informations de différence de configuration sur le canal de contrôle par l'intermédiaire duquel les informations de configuration ou les informations de différence de configuration sont ensuite envoyées, un instant de transmission des informations de configuration correspond à de multiples instants de transmission d'un même faisceau pilote, un instant de transmission des informations de différence de configuration correspond à de multiples instants de transmission des deux mêmes faisceaux pilotes.

4. Système de communication, comprenant :

un premier nœud de communication, qui est configuré pour configurer un groupe pilote incluant N faisceaux pilotes, générer des informations de configuration de chaque type des N faisceaux pilotes ou des informations de différence de configuration de deux types quelconques des N faisceaux pilotes selon une caractéristique de faisceau de chacun des faisceaux pilotes, sélectionner un ou plusieurs faisceaux pilotes respectivement à partir de différents sous-groupes pilotes du groupe pilote, et envoyer les faisceaux pilotes sélectionnés, et les informations de configuration de chaque type des faisceaux pilotes ou les informations de différence de configuration de deux types quelconques des faisceaux pilotes, dans lequel les N faisceaux pilotes incluent au moins deux types de faisceaux pilotes avec différentes caractéristiques de faisceau, le groupe pilote inclut P sous-groupes pilotes, des faisceaux pilotes dans chacun des sous-groupes pilotes ont les mêmes caractéristiques de faisceau, des faisceaux pilotes dans différents sous-groupes pilotes ont différentes caractéristiques de faisceau, où N est un nombre entier non inférieur à 2, P est un nombre entier positif, et les caractéristiques de faisceau sont une puissance de transmission ; et
un second nœud de communication, qui est configuré pour recevoir au moins un type des faisceaux pilotes envoyés par le premier nœud de communication, acquérir les informations de configuration ou les informations de différence de configuration, calculer des valeurs d'amplification de puissance de transmission de deux types quelconques des faisceaux pilotes reçus selon les informations de configuration ou les informations de différence de configuration, et calculer des informations de qualité de canal des faisceaux pilotes reçus, et sélectionner un faisceau pilote selon les valeurs d'amplification de la puissance de transmission et les informations de qualité de canal.

5. Système de communication selon la revendication 4, dans lequel le premier nœud de communication est en outre configuré pour :

porter les informations de configuration ou les informations de différence de configuration dans les faisceaux pilotes sélectionnés et envoyer les informations de configuration ou les informations de différence de configuration conjointement avec les faisceaux pilotes sélectionnés, ou
porter les informations de configuration ou les informations de différence de configuration sur un canal de contrôle, par l'intermédiaire duquel les informations de configuration ou les informations de différence de configuration sont ensuite envoyées.

6. Moyen de stockage informatique, qui stocke des instructions exécutables par ordinateur qui sont configurées pour exécuter le procédé selon au moins l'une des revendications 1 à 3.

Fig. 1

Fig. 2

```
                                                              ┌─S110
┌─────────────────────────────────────────────────┐
│   receiving at least one type of pilot beams from a first    │
│              communication node                     │
└─────────────────────────────────────────────────┘
                        │
                        ▼                             ┌─S120
┌─────────────────────────────────────────────────┐
│  acquiring configuration information of each type of the     │
│  pilot beams or information of a configuration difference    │
│    between any two types of the received pilot beams         │
└─────────────────────────────────────────────────┘
                        │
                        ▼                             ┌─S130
┌─────────────────────────────────────────────────┐
│  calculating boosting values of transmit power of any two    │
│    types of the received pilot beams according to the        │
│        configuration information or the information of a      │
│               configuration difference                       │
└─────────────────────────────────────────────────┘
                        │
                        ▼                             ┌─S140
┌─────────────────────────────────────────────────┐
│  calculating channel quality information of the received     │
│                   pilot beams                       │
└─────────────────────────────────────────────────┘
                        │
                        ▼                             ┌─S150
┌─────────────────────────────────────────────────┐
│ selecting a pilot beam according to the boosting values of   │
│     transmit power and the channel quality information       │
└─────────────────────────────────────────────────┘
                        │
                        ▼                             ┌─S160
┌─────────────────────────────────────────────────┐
│  determining beam information according to the pilot beam    │
└─────────────────────────────────────────────────┘
```

Fig. 3

configuring at least two types of pilot beams — S210

generating configuration information of each of the pilot beams or information of a configuration difference between any two types of the transmitted pilot beams — S220

transmitting the pilot beams — S230

transmitting the configuration information of each of the pilot beams or the information of a configuration difference between any two types of the pilot beams — S240

Fig. 4

configuring at least two types of pilot beams — S310

determining, according to a mapping relationship stored in advance between a time-frequency resource and each type of the pilot beams, time-frequency resources used to transmit the pilot beams — S320

transmitting the pilot beams using the time-frequency resources — S330

Fig. 5

| First receiving unit —110 | Acquisition unit —120 | First calculation unit —130 | Second calculation unit —140 | First selection unit —150 | First determination unit —160 |

Fig. 6

```
      ┌─210              ┌─220              ┌─320
┌──────────────┐   ┌──────────────┐   ┌──────────────┐
│    First     │   │              │   │    Second     │
│configuration │───│  Generation  │───│ transmission  │
│     unit     │   │     unit     │   │     unit      │
└──────────────┘   └──────────────┘   └──────────────┘
```

Fig. 7

```
      ┌─310              ┌─320              ┌─330
┌──────────────┐   ┌──────────────┐   ┌──────────────┐
│    Second    │   │    Second     │   │    Third      │
│configuration │───│ determination │───│ transmission  │
│     unit     │   │     unit      │   │     unit      │
└──────────────┘   └──────────────┘   └──────────────┘
```

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011127358 A1
- WO 2013133645 A1
- US 2013258972 A1